# EUROPEAN PATENT APPLICATION

(11) **EP 4 393 978 A1**
(43) Date of publication of application: **03.07.2024**
(21) Application number: 23219798.8
(22) Date of filing: 22.12.2023
(51) Int. Cl.: C08G 63/91, C08L 67/04

(54) **MARINE BIODEGRADABLE POLYMER BLEND**

(30) Priority: 27.12.2022 US 202218089130
(71) Applicant: Beyond Plastic LLC, Los Angeles, CA 90040 (US)
(72) Inventor: AMBRIZ, Edgar, Los Angeles, 90040 (US)
(74) Representative: Hertin und Partner Rechts- und Patentanwälte PartG mbB

(57) **Abstract**

The current application is directed to marine biodegradable polymer blend having at least 51% by weight of Polyhydroxyalkanoates (PHA); from 0.05% to 2.5% by weight of peroxide additives; greater than 0% but no more than 50% by weight of a plasticizer; and greater than 0% but no more than 2%, of chain extenders.

## Description

The present invention relates to a marine biodegradable polymer blend in particular a polyester-based blend composed primarily of Polyhydroxyalkanoates (PHA's).

PHA's are a class of biodegradable, biocompatible biopolymer compressing of polyesters of R-hydroxyalkanoic acids with high molecular weight. Polyhydroxyalkanoates (PHA's) are accumulated intracellularly by many bacteria and serve as a carbon and energy storage compound. PHA's can be recycle by thermoplastics methods. PHA's are biosynthesized and biodegraded by various marine microbes in a wide range of marine environments, including coastal, shallow-water, and deep-sea environments. PHA's are known for their wide range of biodegradation methods, most PHA's manufacturers have obtained certifications related to industrial compostable, home compostable, and marine biodegradable.

PHA's at room temperature have low elongation compared to traditional thermoplastics such as HDPE, PET, PETG, PP, PC and PLA. The poor elongation of PHAs is due to the fact that, after thermal processing, their crystallization rate increases over time, making them an unstable material. The mechanical properties change abruptly in a couple of hours, the material becomes brittle and crystalline.

There are solutions to improve the mechanical properties of PHA's, but they do not meet the necessary requirements to make the material marine biodegradable. Some examples of PHA's blends to improve mechanical properties are: PHA's + PBAT, PHA's + PLA, PHA's + PP. At present, several research has been developed to improve the mechanical properties of PHA's, the way to address the problem is to blend different thermoplastics and additives with PHA's to achieve the appropriate mechanical, rheological and thermal properties for processing in different applications such as: Injection molding, Blow molding, Thermal forming, Flat film extrusion, Blown film extrusion, Extrusion forming and, Compression molding.

Although there are studies that describe the mechanical, rheological, and thermal improvement of PHAs, the prior art fails to teach PHA's blends that meet with marine biodegradation and the applications mentioned in the list above at the same time.

PHAs modified with PLA and PBAT are currently being developed, but due to the nature of these materials, it is impossible for PHA's blends to be biodegradable in the marine environment, making them unattractive for large-scale production. Recent publications have demonstrated the marine biodegradability of different polymers, among which are; Poly(3-hydroxyalkanoate) (PHA), poly(ε-caprolactone) (PCL) poly(ethylene succinate) (PESu), poly(butylene succinate) (PBSu), poly(butylene succinate-co-adipate) (PBSA), poly(butylene adipate-co-terephthalate) (PBAT), and poly(lactic acid) (PLA). The results obtained showed that only two polymers were capable of biodegrading in the marine environment, PHA's as expected and PCL. Note: To date, biodegradable plastics that degrade in soil and compost have been developed, but most of them show negligible degradation in the ocean. Among them, the biodegradable polyesters PHA and PCL showed good biodegradability in marine environments where biological carbon cycles exist for both polyesters. This allows the materials made of PHA and PCL to be taken up into these carbon cycles and quickly mineralized.

Further, it has been shown that blends that use Bio poly(butylene succinate) BioPBS in their composition have been able to degrade in a marine environment according to ASTM 6691 Standard. This also makes Bio poly(butylene succinate) BioPBS a viable alternative to create mixtures of BioPBS and PHA's or mixtures of the three polymers; PHA'S + PCL + BioPBS due to the mechanical properties of BioPBS, since it has an elongation of 600% of its size and a low melting index of 4 gr/lOmin at 190 °C it is ideal for Blow Film, Blow Molding and Injection Molding applications.

On the other hand, studies have also been carried out that demonstrate the use of peroxides to improve the flow properties of biopolymers blends. A wide range of organic peroxides and azo compounds are used as crosslinkers and vulkanizers. The reason for this is that organic peroxides are able to form radicals very easily by decaying of the O-O bond, induced by heat or by UV-radiation. Some examples are Dicumyl Peroxide, Tert-butyl cumyl peroxide, 2,5-dimethyl-2,5-di-(tert-butylperoxy)-hexane, tert-Butyl peroxybenzoate.

In the same way, chain extenders have been used to improve the mechanical and flow properties of polymers. Chain extenders are normally small compounds with at least two functional groups, which are able to react with the end groups of polymers. The chemically covalent bonds can be formed between polymers, leading to the chain extension and increased molecular weight of polymers.

Bio fillers are used in the formulation of polymer blends to improve thermal properties, decrease melt flow, and reduce large-scale production costs. Some examples of Bio fillers are almond shell, rice starch, sawdust and corn starch.

Based on the mechanical, rheological, and thermal properties of PCL and its ability to degrade in marine environments, a promising avenue of research lies in mixing PCL with PHA, Peroxides additives, chain extenders and bio fillers to improve the mechanical, rheological and thermal behavior of PHA's and achieve a new product capable of performing well in injection molding, blow molding, thermal forming, flat film extrusion, blown film extrusion, extrusion forming, and compression molding applications.

Based on the data collected before, carefully choosing the concentration and type of each component, the inventors provide a series of formulations. These include, in particular:
i) a required melt flow rate during processing for each application;
ii) Various modeled items with a required toughness, and flexibility for each application; and
iii) a tailored degradation rate in the marine environment based in the ASTM 6691 Standard.

In some embodiments a marine biodegradable blend is provided comprising:
at least 51% by weight of Polyhydroxyalkanoates (PHA's);
from 0.05% to 2.5% by weight of peroxide additives;
no more than 50% of poly(ε-caprolactone) (PCL) with a molecular weight of at least 70,000, preferably 70,000 to 80,000;
No more than 50% of Bio poly(butylene succinate) (BioPBS); and
at least some but no more than 2%, preferably 0.05% to 2% of chain extenders, and
no more than 10% of Bio fillers.

If the percentage of additives and other polymers is greater than the percentage of PHA's, it is not reasonable to consider PHA's as the base. The blends of the embodiments of the current application use a PHA base. Furthermore, using high amounts of PCL results in a lowering of the melting point of the composition. For example, more than 50% of PCL results in the composition having a melting point of no more than 55°C. Such a low melting point renders the composition unsuitable for its intended use in packaging products as the package would melt under real world conditions. For example, it is well known that shipping contains crossing either the Atlantic or Pacific Ocean can commonly reach at least 58°C. Therefore, melting points must be substantially greater than 58°C to ensure the material can function as a packaging material.

When using percentages greater than 2.5% of peroxides, the reaction is very aggressive and mixtures are difficult to impossible to make homogeneous. This is due to a violent reaction between the peroxide and the polymer blends. This overreaction results in an inability to process them.

The molecular weight of the poly(ε-caprolactone) is important at least because it is related to its melt index where less than 15 g/10 min is the optimal target. If the molecular weight is lower than the ranges specified above, the melt index would be higher. This results in a material which is less viscous at high temperatures. The base polymer PHA already have a relatively high melt index for the desired applications at about 40 g/10 min. A higher melt index would therefore result in embodiments unsuitable for their intended purpose. Polymer PHA with a molecular weight above 80,000 could be suitable but is rare and more expensive.

There are several grades of Bio poly(butylene succinate) and depending on its properties it can be used in several applications, low melt index (less than or equal to 20 gr/10min) with high percentages of elongation (greater than 100%) can be used for blow film and blow molding applications. If the PBS contains a melt index above 20 gr/10min and elongation less than 100% it is more suitable for injection molding applications.

The chain extenders unite the polymers and create homogeneous polymer blends. However, chain extenders are not 100% marine biodegradable. For example, some of them are acrylics. According to the ASTM standard it is not suitable to use more than 1% of materials that are not marine biodegradable. A maximum of 2% is still a safe way to arrive at this ASTM standard, i.e., pass the marine biodegradability test, since at least 1% of the chain extenders are expected to react with the polymers. However, if less than 0.5% of the chain extenders remain in the composition, a significant negative change in homogeneity in the polymer blends will occur.

The purpose of using chain extenders is to make homogeneous blends of polymers and create compatibility, without at least 0.5% of chain extenders in the composition homogeneous blends are not obtained. This results in the resulting polymer blends being inconsistent and unsuitable for the intended purpose.

The use of bio fillers function to reduce costs. An advantage of bio fillers is that they are highly biodegradable, which when used in the application of the embodiments herein does not affect the biodegradability of the overall blend.

No more than 10% of Bio fillers are suitable for use in the composition. Some embodiments do not use bio fillers. The purpose of using bio fillers is to reduce costs. Bio fillers are highly biodegradable, which therefore do not affect the overall biodegradability of the composition.

### Examples:

| **Formula 1** | | | |
|---|---|---|---|
| **Formula Beyond plastic** | **Material** | **%** | **Marine Bio** |
| **Base** | PHA Y1000 P | 59.75% | Yes |
| **Plasticizer** | PCL Galaxy | 40.00% | Yes |
| **vulcanizer** | Dicumyl peroxide | 0.25% | NA |
| **Total** | | 100.00% | |

| **Properties** | **PHA Enmat Y1000P** | **Formula 1** |
|---|---|---|
| Melt Index (grams/10 min) | 40 | 18 |
| Melting Point (Celsius Degrees) | 175 | 175 |
| Density (grams/cm3) | 1.25 | 1.21 |
| Young's Modulus MPa | 1600 | 1300 |
| Tensile Strength MPa | 39 | 24 |
| Elongation (%) | 3.8 | 15 |
| Thermal Degradation (Celsius Degrees) | 270 | 340 |

The reaction between PHA, PCL, and Dicumyl peroxide created a blend with unique properties these properties include, for example, high elongation, flexibility, better tensile strength, good thermal stability, and low melt flow index, which allow the product to be suitable for injection and blow molding applications. While it may be possible to formulate other compositions, which are suitable for injection molding and blow molding, the formulations such formulations are not marine biodegradable and compostable.

PHA is generally not suitable for injection and blow molding applications because have poor mechanical properties and high melt index. However, with the addition of a suitable vulcanizer, for example, dicumyl peroxide in certain amount one can modify the melt index to achieve subtility for injection and blow molding applications. For example, for injection molding applications a high melt index is crucial and for the blow molding a low melt index is needed. Adding more dicumyl, decreases the melt index.

For example, the combination of PHA at ≥ 80% with PCL ≤ at 20% and Peroxides and Chain extenders ≤ at 1% allows the product to be used in injection applications and the combination of PHA at ≥ 50% with PCL ≤ at 50% and Peroxides and Chain extenders at 1% allows the product to be used in blow molding application.

In addition to the above, mechanical and thermal unique properties immerge which are not present in PHA alone or in prior art compositions with substantial amounts of PHA and especially not in compositions with substantial amounts of PHA that are suitable for injection and blow molding applications which are also suitable to degrade in marine environments. These properties are, for example melt, index below of 20 grams/10 min, max elongation of 30%, thermal degradation above of 270 Celsius.

### Additional Examples:

| **F0009** | | | |
|---|---|---|---|
| **Formula** | **Material** | **%** | **Marine Bio** |
| **Base** | PHA Y1000 P | 79.00% | Yes |
| **Plasticizer** | PCL Alfa 70-80 k | 20.00% | Yes |
| **Chain Extender** | Joncryl ADR-4468 | 1.00% | NA |
| **Total** | | 100.00% | |

| **F0009-a** | | | |
|---|---|---|---|
| **Formula** | **Material** | **%** | **Marine Bio** |
| **Base** | PHA Y1000 P | 80.00% | Yes |
| **Plasticizer** | PCL Alfa 70-80 k | 19.00% | Yes |
| **Chain Extender** | Joncryl ADR-4468 | 1.00% | NA |
| **Total** | | 100.00% | |

| **F0018** | | | |
|---|---|---|---|
| **Formula Beyond plastic** | **Material** | **%** | **Marine Bio** |
| **Base** | PHA Y1000 P | 64.50% | Yes |
| **Plasticizer** | PCL Alfa 70-80 k | 35.00% | Yes |
| **Vulcanizer** | Dicumyl peroxide | 0.50% | NA |
| **Total** | | 100.00% | |

| **F0022** | | | |
|---|---|---|---|
| **Formula Beyond plastic** | **Material** | **%** | **Marine Bio** |
| **Base** | PHA Y1000 P | 59.75% | Yes |
| **Plasticizer** | PCL Galaxy | 40.00% | Yes |
| **Vulcanizer** | Dicumyl peroxide | 0.25% | NA |
| **Total** | | 100.00% | |

| **F0022-BLACK** | | | |
|---|---|---|---|
| **Formula Beyond plastic** | **Material** | **%** | **Marine Bio** |
| **Base** | PHA Y1000 P | 59.25% | Yes |
| **Plasticizer** | PCL Galaxy | 40.00% | Yes |
| **Bio filler** | Carbon black | 0.50% | |
| **Vulcanizer** | Dicumyl peroxide | 0.25% | NA |
| **Total** | | 100.00% | |

| **F0031** | | | |
|---|---|---|---|
| **Formula Beyond plastic** | **Material** | **%** | **Marine Bio** |
| **Base** | PHA Y1000 P | 59.90% | Yes |
| **Plasticizer** | PCL Galaxy | 40.00% | Yes |
| **Vulcanizer** | Dicumyl peroxide | 0.10% | NA |
| **Total** | | 100.00% | |

| **F0036** | | | |
|---|---|---|---|
| **Formula Beyond plastic** | **Material** | **%** | **Marine Bio** |
| **Base** | PHA Y1000 P | 54.75% | Yes |
| **Plasticizer** | PCL | 40.00% | Yes |
| **Bio filler** | Calcium carbonate | 5.00% | |
| **Reinforcement additive** | Dicumyl peroxide | 0.25% | NA |
| **Total** | | 100.00% | |

| **F0054** | | | |
|---|---|---|---|
| **Formula Beyond plastic** | **Material** | **%** | **Marine Bio** |
| **Base** | EMNAT PHA Y1000 P | 63.00% | Yes |
| **Plasticizer** | BioPBS | 35.00% | Yes |
| Hexagonal Boron Nitride (h-BN) Powder, 99% Purity, 1∼2 um | Nucleating agent, improves crystallization rate | 1.00% | NA |
| **Reinforcement additive** | Joncryl ADR 4400 | 1.00% | |
| **Total** | | 100.00% | |

| **F0077** | | |
|---|---|---|
| **Formula Beyond plastic** | **Material** | **%** |
| **Polymer** | Enmat Y1000P PHBV | 50.00% |
| **Polymer** | BioPBS | 24.00% |
| **Polymer** | Polycaprolactone | 24.00% |
| **Nucleating agent** | Boron Nitride | 1.00% |
| **Chain Extender** | Joncryl 4400 | 1.00% |
| **Total** | | 100.00% |

## Claims

1. A composition comprising:
at least 51% by weight of Polyhydroxyalkanoates (PHA);
from 0.05% to 2.5% by weight of peroxide additives;
greater than 0% but no more than 50% by weight of a plasticizer; and
greater than 0% but no more than 2%, of chain extenders.

2. The composition of claim 1 wherein the plasticizer is poly(ε-caprolactone) (PCL) with a molecular weight of at least 70,000

3. The composition of claim 1 additionally comprising from greater than 0% to no more than 10% of Bio fillers by weight.

4. The composition of claim 1, wherein the composition have a melting point of at least 270°C.

5. The composition of claim 3, wherein the composition have a melting point of at least 340°C.

6. The composition of claim 1 wherein 1% to 2% of chain extenders are present in the composition

7. The composition of claim 1 additionally comprising greater than 0% but no more than 2%, of a nucleating agent.

8. The composition of claim 7 comprising 1% of a nucleating agent.
